# EUROPEAN PATENT SPECIFICATION

(11) **EP 2 028 411 B1**
(45) Date of publication and mention of the grant of the patent: **06.04.2011**
(21) Application number: 08162033.8
(22) Date of filing: 07.08.2008
(51) Int. Cl.: F21V 7/00, F21Y 101/02, F21W 101/02

(54) **Vehicle cornering lamp**
Kurvenfahrtscheinwerfer für Fahrzeug
Phare de virage de véhicule

(30) Priority: 21.08.2007 JP 2007214623
(43) Date of publication of application: 25.02.2009
(73) Proprietor: Koito Manufacturing Co., Ltd., Tokyo 108-8711 (JP)
(72) Inventor: Tanaka, Hidetada, Kitawaki Shimizu-ku Shizuoka-shi Shizuoka (JP)
(74) Representative: Finnie, Peter John

(56) References cited:
- EP-A2- 0 208 895
- DE-A1-102004 053 320
- JP-A- 2003 317 510
- US-A- 4 704 661
- US-A1- 2005 094 413

## Description

### BACKGROUND OF THE INVENTION

### <FIELD OF THE INVENTION>

The present invention relates to a vehicle cornering lamp for illuminating a road surface obliquely forward of a vehicle by reflecting a light from a light source to a front of the lamp by a reflector.

### <BACKGROUND ART>

In general, a vehicle cornering lamp is made to illuminate a road surface obliquely forward of a vehicle in order to enhance a visibility when the vehicle is turning, and in order to illuminate horizontally widely a foreground of the road in a traveling direction of the vehicle while the vehicle is turning, the cornering lamp is made to form a horizontally elongated light distribution pattern.

For example, JP-A-2003-317510 describes a vehicle cornering lamp for forming a horizontally elongated distribution pattern by reflecting light from a light source as downwardly directing light which diffuses in the horizontal direction.

In addition, JP-A-2005-141919 describes a lamp unit which constitutes a part of a vehicle headlamp, and a reflecting surface of a reflector of the lamp unit is made up of a parabolic cylinder plane in which an axis which extends in a direction inclined rearward at a predetermined angle towards an outside in a vehicle width direction is made a focal line.

In the vehicle cornering lamp described in JP-A-2003-317510, there may be a fear that a driver of an oncoming vehicle or oncoming pedestrians are dazzled by a glare of light directly upward emitted from a light source thereof.

On the other hand, when the lamp unit described in JP-A-2005-141919 is used as a vehicle cornering lamp, although it becomes possible to illuminate a road surface obliquely forward of the vehicle without generating upward direct light from the light source, there will be caused the following problem.

Namely, in cornering lamps, it is desired from the viewpoint of increasing the visibility of pedestrians or the like not only to illuminate brightly a road surface obliquely forward of the vehicle but also to illuminate upper space above the road surface with less intensive light. However, if the configuration described in JP-A-2005-141919 is adopted as it is, since no light is emitted to the upper space above the road surface obliquely forward of the vehicle, there is caused a problem that the visibility of pedestrians or the like in the space cannot be sufficiently ensured.

### SUMMARY OF THE INVENTION

One or more embodiments of the invention provide a vehicle cornering lamp for illuminating a road surface obliquely forward of a vehicle by reflecting light from a light source to a front of the lamp by a reflector, which can substantially uniformly illuminate an upper space above the road surface obliquely forward of the vehicle with light having such a low luminous intensity as not to produce glare.

According to the invention, the above vehicle cornering lamp is realized by using a light emitting element directing downward as the light source and devising a configuration of a reflector.

In accordance with one or more embodiments of the invention, a vehicle cornering lamp is provided with: a light source comprising a light emitting element directing downward; and a reflector for reflecting light from the light source to a front of the lamp so as to illuminate obliquely forward of a vehicle. In the vehicle cornering lamp, a reflecting surface of the reflector is provided with: a downwardly directing reflecting area for reflecting light from the light emitting element as downwardly directing light which diffuses in a horizontal direction; and an upwardly directing reflecting area for reflecting light from the light emitting element as upwardly directing light which diffuses in a vertical direction and the horizontal direction. In the vehicle cornering lamp, the upwardly directing reflecting area is disposed in a vicinity of an upper edge of the reflecting surface. The upwardly directing reflecting area comprises an elliptic cylinder plane, a vertical sectional shape of the elliptic cylinder plane being an ellipse having a first focal point in a vicinity of the light emitting element and a second focal point on a point further forward than the first focal point, and the vertical sectional shape extending in the horizontal direction. A focal line of the elliptic cylinder plane extends in a direction inclined rearward towards an outside in a vehicle width direction.

The "light emitting element" means an element type light source having a surface-emitting chip which emits light in a substantially dotted fashion, and there is no specific limitation on types thereof. For example, light-emitting diodes or laser diodes can be adopted as the "light emitting element".

The expression "(a light emitting element) directing downward" includes not only a configuration in which the light emitting element is disposed in such a manner as to direct vertically downward but also a configuration in which the light emitting element is disposed in such a manner as to direct in an inclined direction relative to the vertically downward direction.

There is no specific limitation on the specific configuration of the "downwardly directing reflecting area" as long as the downwardly directing reflecting area is made to reflect light from the light emitting element as the downwardly directing light which diffuses in the horizontal direction in order to illuminate the road surface lying obliquely forward of the vehicle.

Although the "upwardly directing reflecting area" is disposed in the vicinity of the upper end edge of the reflecting surface, there is no specific limitation on a location of the upper end edge of the reflecting surface where the upwardly directing reflecting area is formed.

There is no specific limitation on the specific position of the "point further forward than the first focal point" as long as it is a point which is situated further forward than the first focal point so that the upwardly directing reflecting area can reflect light from the light emitting element as upwardly directing light which diffuses in the vertical direction when the second focal point is set on the point.

Although there is no limitation on the specific value of the "first inclination angle (between the focal line of the elliptic cylinder plane and the vehicle width direction)" it is possible to set it to values ranging substantially from 40 to 70°, for example.

As is shown in the configuration described above, in the vehicle cornering lamp, the light source is made up of the light emitting element which is disposed in such a manner as to direct downward, and the reflecting surface of the reflector is made up of the downwardly directing reflecting area which reflects the light from the light emitting element as the downwardly directing light which diffuses in the horizontal direction and the upwardly directing reflecting area which reflects the light from the light emitting element as the upwardly oriented light which diffuses not only in the vertical direction but also in the horizontal direction. Since the upwardly directing reflecting area is disposed in the vicinity of the upper end edge of the reflecting area and is made up of the elliptic cylinder plane which has the vertical section shaped in the ellipse in which the first focal point is disposed on the point in the vicinity of the light emitting element and the second focal point is disposed on the point further forward than the first focal point and extends in the horizontal direction and the focal line of the elliptic cylinder plane extends in the direction inclined rearward towards the outside in the vehicle width direction, the following function and advantage can be obtained.

Namely, the light from the light emitting element which is reflected on the downwardly directing reflecting area illuminates the road surface obliquely forward of the vehicle as the downwardly directing light which diffuses in the horizontal direction, while the light from the light emitting element which is reflected on the upwardly directing reflecting area illuminates upper space above the road surface obliquely forward of the vehicle as the upwardly directing light which diffuses not only in the vertical direction but also in the horizontal direction.

It becomes possible to obtain the light which diffuses not only in the vertical direction but also in the horizontal direction by adopting the configuration in which the upwardly directing reflecting area is made up of the elliptic cylinder plane. Since the upwardly directing reflecting area is disposed in the vicinity of the upper end edge of the reflecting surface, the upwardly directing reflecting area can be easily formed in a position close to the light emitting element. By forming the upwardly directing reflecting area in the position close to the light emitting element, a distribution pattern formed by reflected light from the upwardly directing reflecting is formed as a large collected light source images, whereby a wide area of upper space above the road surface obliquely forward of the vehicle can be easily illuminated substantially uniformly with light having a low luminous intensity.

In the vehicle cornering lamp for illuminating the road surface obliquely forward of the vehicle by reflecting light from the light emitting element towards the front of the lamp by the reflector, the upper space above the road surface obliquely forwardof the vehicle canbe substantially uniformly illuminated with light having such a low luminous intensity as not to produce glaring light. In addition, the visibility of pedestrians or the like can be sufficiently enhanced by the configuration described above. The illumination range of the upper space above the road surface obliquely forward of the vehicle can be adjusted appropriately by the backwardly inclination angle of the focal line of the elliptic cylinder plane.

In the configuration described above, if at least a part of the downwardly directing reflecting area is made up of a parabolic cylinder plane having a focal line extending in a direction inclining rearward towards the outside of the vehicle width direction and passing through the point in the vicinity of the light emitting element, downwardly directing light which diffuses largely in the horizontal direction can be obtained. If a first inclination angle between the focal line of the elliptic cylinder plane and the vehicle width direction is set larger than a second inclination angle between the focal line of the parabolic cylinder plane and the vehicle width direction, the upper space above the road surface obliquely forward of the vehicle can be widely horizontally illuminated to the side of the vehicle, whereby a recognition of a pedestrian who is situated in an area substantially just beside the vehicle can also be further facilitated.

The upwardly directing reflecting area may be disposed in a position on the reflecting surface outwards in the vehicle width direction, the part of the downwardly directing reflecting area where the parabolic cylinder plane is formed may be set as a first reflecting area disposed downward than the upwardly directing reflecting area, and a reflecting area in the downwardly directing reflecting area positioned inwards in the vehicle width direction of the upwardly directing reflecting area and the first reflecting area may be set as a second reflecting area for reflecting light from the light emitting element as downwardly directing light which diffuses in the horizontal direction at a diffuse angle which is smaller than reflected light from the first reflecting area. By the above configuration, the following function and advantage can be obtained.

Since the upwardly directing reflecting area is made up of the elliptic cylinder plane and the first reflecting area of the downwardly directing reflecting area is made up of the parabolic cylinder plane, by these upwardly directing reflecting area and first reflecting area being disposed in the position on the reflecting surface which lies further outwards in the vehicle width direction, the illumination of the road surface obliquely forward of the vehicle and the upper space thereabove can easily be implemented without inclining the orientation of the lamp extremely largely towards the outside in the vehicle width direction with respect to the longitudinal direction of the vehicle. In addition, by the reflecting area which lies further inwards in the vehicle width direction than the upwardly directing reflecting area and the downwardly directing reflecting area being made the second reflecting area to thereby reflect the light from the light emitting element as the downwardly directing light which diffuses in the horizontal direction at the diffuse angle which is smaller than reflected light from the first reflecting area, a hot zone can easily be formed which constitutes a high luminous intensity area of a distribution pattern provided by the vehicle cornering lamp.

If a boundary line between the upwardly directing reflecting area and the first reflecting area and the second reflecting area is set to be positioned on a vertical plane which passes through the vicinity of a light emitting center of the light emitting element, almost all reflected light from the upwardly directing reflecting area and almost all reflected light from the first reflecting area of the downwardly directing reflecting area can be made not to be emitted further inwards in the vehicle width direction than the front direction of the lamp, whereby the illuminating range can easily be controlled.

In addition, by adopting the configuration described above, the following function and advantage can be obtained.

Namely, since the backwardly inclination angle of the focal line of the elliptic cylinder plane which constitutes the upwardly directing reflecting area is set to be the larger value than the backwardly inclination angle of the focal line of the parabolic cylinder plane of the first reflecting area of the downwardly directing reflecting area, a transversely elongated wedge-shaped stepped portion is inevitably formed therebetween which gradually increases from the outside in the vehicle width direction towards the inside in the vehicle width direction. In addition, by the stepped portion, part of light traveling from the light emitting element to the first reflecting area of the downwardly directing reflecting area is blocked by the upwardly directing reflecting area to thereby be prevented from being incident on the first reflecting area. In the respect, by the boundary line between the upwardly directing reflecting area and the first reflecting area and the second reflecting area being set to be positioned on the vertical plane which passes through the vicinity of the light emitting center of the light emitting element, the transversely elongated wedge-shaped stepped portion can be prevented from becoming extremely large. Then, by the configuration, the area on the first reflecting area of the downwardly directing reflecting area on which light is not incident can be suppressed to a small level, thereby making effective use of the luminous flux of the light source.

Although there is imposed no specific limitation on the specific configuration of the second reflecting area of the downwardly directing reflecting area, provided that the second reflecting area is configured so that light from the light emitting element is reflected as downwardly directing light which diffuses in the horizontal direction at a larger diffuse angle than reflected light from the first reflecting area, in the event that the second reflecting area is made up of a plurality of reflecting elements which are formed based on, as a reference plane, a paraboloidal plane in which the point lying in the vicinity of the light emitting element is made a focal point, the reflected light control on light from the light emitting element can be implemented in detail, whereby a distribution pattern of the vehicle cornering lamp can easily be formed which is provided with a desired luminous intensity distribution.

Other aspects and advantages of the invention will be apparent from the following description, the drawings and the claims.

### BRIEF DESCRIPTION OF THE DRAWINGS

Fig. 1 is a front view showing a vehicle cornering lamp according to an exemplary embodiment of the invention.
Fig. 2 is a sectional view taken along the line II-II in Fig. 1.
Fig. 3 is a sectional view taken along the line III-III in Fig. 1 and viewed in a direction indicated by arrows attached to the line.
Fig. 4 is a perspective view of a lamp distribution pattern which is formed on an imaginary vertical screen disposed at a distance of 25 m ahead of the vehicle by light emitted from the vehicle cornering lamp.

### <Description of Reference Numerals and Characters>

2 pedestrian; 10 vehicle cornering lamp; 12 light emitting element; 12a light emitting chip; 12b substrate; 14 reflector; 14a reflecting surface; 14aA downwardly directing reflecting area; 14aB upwardly directing reflecting area; 14aA1 first reflecting area; 14aA2 second reflecting area; 14aB upwardly directing reflecting area; 14b boundary line; 14c upper end flange portion; 14g stepped portion; 14s reflecting element; 16 support plate; 16a radiator fin; 18 holder; 18a lower surface; 18b opening portion; A point; Ax lamp reference axis; Ax0, Ax3 axis; Ax1, Ax2 focal line; B predetermined point; HZ hot zone; O light emitting center; P lamp distribution pattern; PA1, PA2, PB distribution pattern; α,β predetermined angle.

### DETAILED DESCRIPTION OF THE EXEMPLARY EMBODIMENTS

An exemplary embodiment of the invention will be described referring to drawings.

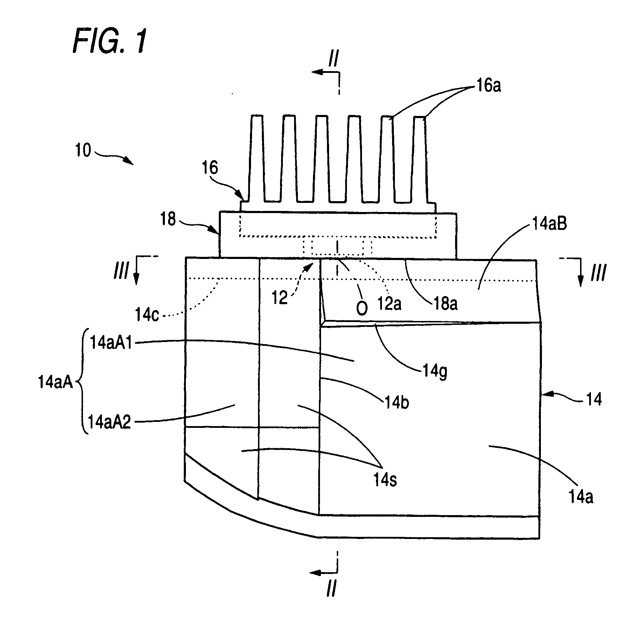

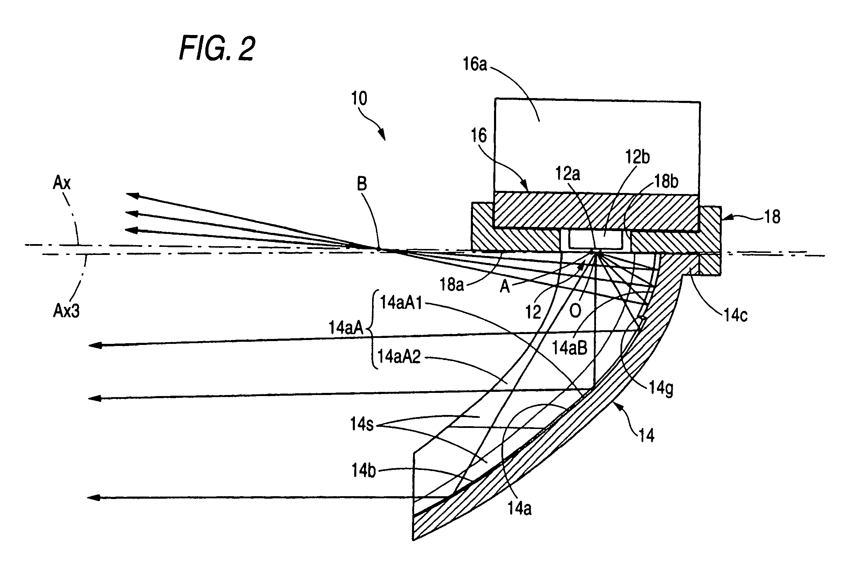

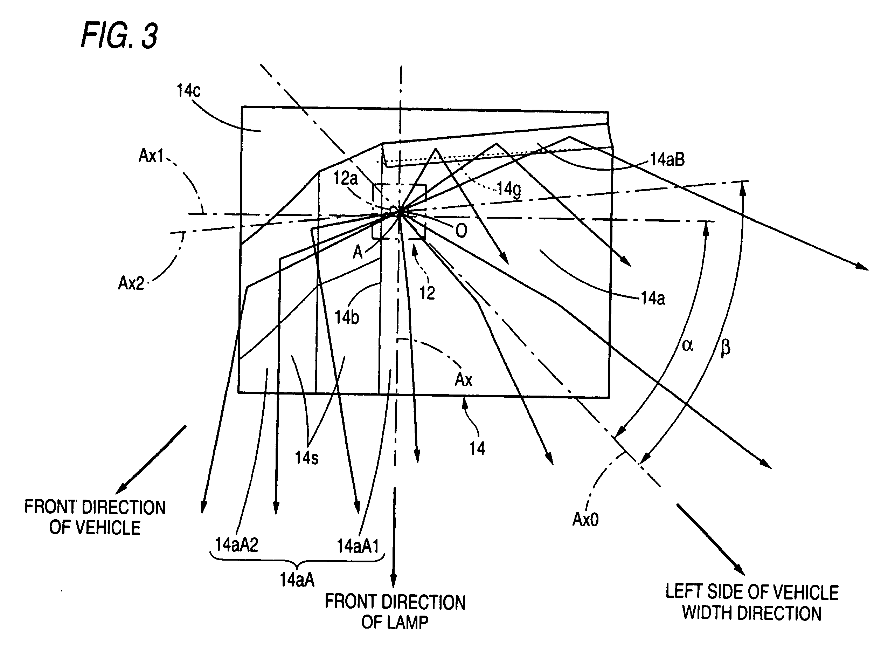

Fig. 1 is a front view showing a vehicle cornering lamp 10 according to an exemplary embodiment of the invention. Fig. 2 is a sectional view taken along the line II-II in Fig. 1. Fig. 3 is a sectional view taken along the line III-III in Fig. 1 and viewed in a direction indicated by arrows attached to the line.

As is shown in the drawings, the vehicle cornering lamp 10 according to the exemplary embodiment is a cornering lamp mounted in a front left-hand side corner portion of a vehicle body. The cornering lamp 10 is configured to illuminate when the vehicle is turning left so as to illuminate a road surface obliquely leftwards forward of the vehicle. The vehicle cornering lamp 10 is used in such a state that the cornering lamp 10 is disposed within a lamp compartment which is defined by a clear cover and a lamp body.

In the vehicle cornering lamp 10, a lamp reference axis Ax which extends in a front direction of the lamp extends in a direction which is inclined 40° outwards in a vehicle width direction relative to a longitudinal direction of the vehicle. In addition, the vehicle cornering lamp 10 includes a light emitting element 12 which is disposed on the lamp reference axis Ax to direct downward in a vertical direction and a reflector 14 which is disposed below the light emitting element 12 for reflecting light from the light emitting element 12 to the front of the lamp.

The light emitting element is a white light emitting diode and is made up of a light emitting chip 12a which has a horizontally elongated rectangular (for example, a rectangular substantially sized 2 mm long and 1 mm wide) light emitting surface and a substrate 12b which supports the light emitting chip 12a. When the light emitting element 12 is assembled, the light emitting chip 12a is sealed with a film for covering a light emitting surface.

The light emitting element 12 is fixedly supported on a metallic support plate 16 in such a state that the light emitting chip 12a is disposed on the lamp reference axis Ax in such a manner as to direct downward in the vertical direction and that a longer side of the light emitting chip 12a is positioned at a front end edge in the front direction of the lamp. A plurality of radiator fins 16a are formed on an upper surface of the support plate 16. The support plate 16 is positioned and fixed to a holder 18. A lower surface 18a of the holder 18 is made up of a horizontal plane which includes the lamp reference axis Ax. An opening portion 18b for accommodating the light emitting element 12 is formed in the holder 18.

The reflector 14 has a reflecting surface 14a including a downwardly directing reflecting area 14aA and an upwardly directing reflecting area 14aB. The reflector is positioned and fixed to the holder 18 at its upper end flange portion 14c.

The downwardly directing reflecting area 14aA is a reflecting area for reflecting light from the light emitting element 12 as downwardly directing light which diffuses in a horizontal direction. The downwardly directing reflecting area 14aA includes a first reflecting area 14aA1 and a second reflecting area 14aA2. The upwardly directing reflecting area 14aB is a reflecting area for reflecting light from the light emitting element 12 as upwardly directing light which diffuses in a vertical direction and the horizontal direction. The upwardly directing reflecting area 14aB is disposed in a position on the reflecting surface 14a closer to an outer side in the vehicle width direction thereof. The first reflecting area 14aA1 of the downwardly directing reflecting area 14aA is disposed below the upwardly directing reflecting area 14aB. The second reflecting area 14aA2 of the downwardly directing reflecting area 14aA is disposed further inwards in the vehicle width direction than these first reflecting area 14aA1 and the upwardly directing reflecting area 14aB.

In the disposition described above, a vertical width of the upwardly directing reflecting area 14aB is set to a value of the order of 1/5 to 1/3 of a vertical width of the whole reflecting surface 14a. A boundary line between the upwardly directing reflecting area 14aB and the first reflecting area 14aA1 and the second reflecting area 14aA2 is positioned on a vertical plane which passes in the vicinity of a light emitting center O of the light emitting element 12. Specifically, the boundary line 14b is positioned slightly inwards in the vehicle width direction than the light emitting center O of the light emitting element 12.

The first reflecting area 14aA1 of the downwardly directing reflecting area 14aA is configured by a parabolic cylinder plane. The parabolic cylinder plane has a focal line Ax1 on a line extending in a direction inclined rearward at a predetermined angle α (a second inclination angle α) towards the outside in the vehicle width direction so as to pass through a point A in the vicinity of the light emitting element 12 (namely, a direction inclined rearward at the predetermined angle α towards the outside in the vehicle width direction relative to an axis Ax0 which extends in the vehicle width direction). The point A is positioned at the front end edge of the light emitting chip 12a of the light emitting element 12 on the lamp reference axis Ax. The value of the predetermined angle α is set to 45°. Furthermore, an axis of a parabola which makes up a vertical section of the parabolic cylinder plane is made up of an axis Ax3 which extends while being directed downward on the order of 1° relative to the lamp reference axis Ax.

Thereby, the first reflecting area 14aA1 is configured to reflect light from the light emitting element 12 as parallel light directing slightly downward with respect to the vertical direction and to reflect the light in such a manner as to diffuse to the left relative to the front direction of the vehicle at an angle ranging substantially from 35 to 105° with respect to the horizontal direction.

The upwardly directing reflecting area 14aB is configured by an elliptic cylinder plane extending in the horizontal direction. The elliptic cylinder plane has its vertical section shaped in an ellipse. The ellipse has a first focal point on the light emitting center O of the light emitting element 12 and a second focal point on a predetermined point B positioned further forward than the first focal point. A focal line Ax2 of the elliptic cylinder plane is inclined rearward at a predetermined angle β (a first inclination angle β) towards the outside in the vehicle width direction. The predetermined angle β is set to 55°, which is slightly larger than the predetermined angle α. The predetermined point B is positioned on the lamp reference axis Ax.

Thereby, the upwardly directing reflecting area 14aB is configured to reflect light from the light emitting element 12 in such a manner as to diffuse upwards at an angle ranging substantially from 0 to 20° with respect to the vertical direction and to reflect the light in such a manner as to diffuse to the left at an angle ranging substantially 45 to 115° relative to the front direction of the vehicle with respect to the horizontal direction.

The second reflecting area 14aA2 of the downwardly directing reflecting area 14aA is configured to reflect light from the light emitting element 12 as downwardly reflected light which diffuses in the horizontal direction at a smaller diffuse angle than reflected light from the first reflecting area 14aAl. The second reflecting area 14aA2 is configured by a plurality of reflecting elements 14s. Each of the reflecting elements 14a is formed based on a reference plane. The reference plane is a paraboloidal plane having a focal point on the point A in the vicinity of the light emitting element 12 and a center axis on the axis Ax3 which extends while being directed downward on the order of 1° relative to the lamp reference axis Ax.

Thereby, the second reflecting area 14aA2 is configured to reflect light from the light emitting element 12 in such a manner as to diffuse downward at an angle ranging substantially from 1 to 10° with respect to the vertical direction and with respect to the horizontal direction, to reflect the light in such a manner as to diffuse to the left at an angle ranging substantially 20 to 70° relative to the front direction of the vehicle, as well as collect it to the front direction of the lamp to some extent.

Since the focal line Ax2 of the elliptic cylinder plane which makes up the upwardly directing reflecting area 14aB is inclined 10° rearward further relative to a focal line of the parabolic cylinder plane which makes up the first reflecting area 14aA1 of the downwardly directing reflecting area 14aA, a horizontally elongated wedge-shaped stepped portion 14g which gradually increases from the outside in the vehicle width direction towards an inside in the vehicle width direction is formed between the first reflecting area 14aA1 of the downwardly directing reflecting area 14aA and the upwardly directing reflecting area 14aB.

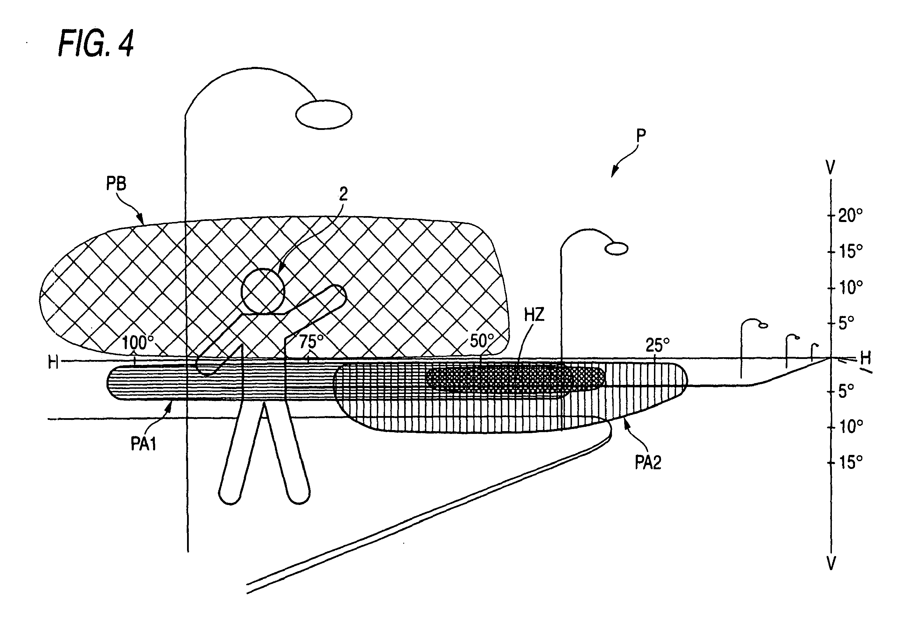

Fig. 4 is a perspective view showing a lamp light distribution pattern P formed on an imaginary vertical screen disposed in a position at a distance of 25 m ahead of the front of the vehicle by light emitted to the front of the lamp from the vehicle cornering lamp 10 according to the embodiment.

The lamp distribution pattern P is a distribution pattern which is formed by light from the light emitting element 12 and reflected on the reflecting surface 14a of the reflector 14. The lamp distribution pattern P is configured by three distribution patterns PA1, PA2, PB.

The distribution pattern PA1 is a distribution pattern which is formed by reflected light from the first reflecting area 14aA1 of the downwardly directing reflecting area 14aA.

The distribution pattern PA1 is formed as a horizontally elongated distribution pattern which diffuses largely in the horizontal direction within an angle ranging substantially 35 to 105° to the left of a line V-V which is a vertical line passing through an H-V point which is a vanishing point in the front direction of the vehicle of an axis which extends in the longitudinal direction of the vehicle in such a manner as to pass through the light emitting center O of the light emitting element 12. An upper end edge of the distribution pattern PA1 is situated slightly below (specifically, on the order of 1° below) a line H-H which is a horizontal line which passes through the H-V point. A lower end edge thereof is situated in the vicinity of a point lying 5° below the line H-H.

Since the focal line Ax1 of the parabolic cylinder plane which makes up the first reflecting area 14aA1 is set to be positioned at the front end edge of the light emitting chip 12a of the light emitting element 12, the distribution pattern PA1 is formed most clearly at the upper end edge. The reason the upper end edge of the distribution pattern PA1 is positioned on the order of 1° below relative to the line H-H is that the axis Ax3 which is the axis of the parabola which makes up the vertical section of the parabolic cylinder plane extends while being directed downward on the order of 1° relative to the lamp reference axis Ax.

In the distribution pattern PA1, although a direction inclined 45° to the left of the line V-V (that is, the front direction of the lamp) becomes brightest because the first reflecting area 14aA1 is made up of the parabolic cylinder plane in which the axis extending in the direction inclined 45° rearward towards the outside in the vehicle width direction is made the focal line Ax1, the distribution pattern PA1 is formed with substantially uniform brightness over its overall width.

The distribution pattern PA2 is a distribution pattern which is formed by reflected light from the second reflecting area 14aA2 of the downwardly directing reflecting area 14aA.

The distribution pattern PA2 is formed as a slightly horizontally elongated distribution pattern which diffuses in the horizontal direction within an angle ranging substantially 20 to 70° to the left of the line V-V, and an upper end edge thereof is situated slightly below (specifically, on the order of 1° below) the line H-H, while a lower end edge thereof is situated in the vicinity of a point lying 10° below the line H-H.

Since the paraboloidal lane which constitutes the reference plane of the respective reflecting elements 14s which make up the second reflecting area 14aA2 is set to be positioned at the front end edge of the light emitting chip 12a of the light emitting element 12, the distribution pattern PA2 is formed most clearly at its upper end edge. The reason the upper end edge of the distribution pattern PA2 is positioned on the order of 1° below relative to the line H-H is that the axis Ax3 which is the center axis of the paraboloidal plane extends while being directed downward on the order of 1° relative to the lamp reference axis Ax.

The distribution pattern PA2 is made to form a horizontally elongated hot zone HZ which extends in the horizontal direction about a direction inclined 45° to the left of the line V-V (that is, the front direction of the lamp). The formation of the hot zone HZ is made to be implemented by setting appropriately respective surface shapes of the plurality of reflecting elements which make up the second reflecting area 14aA2.

The distribution pattern PB is a distribution pattern which is formed by reflected light from the upwardly directing reflecting area 14aB.

The distribution pattern is formed as a slightly horizontally elongated distribution pattern which diffuses in the vertical direction and the horizontal direction at an angle ranging substantially 45 to 115° to the left of the line V-V, and its lower end edge is positioned in the vicinity of the line H-H, while its upper end edge is positioned in the vicinity of a point lying 20° above the line H-H.

The reason the lower end edge of the distribution pattern PB is positioned in the vicinity of the line H-H is that the light emitting chip 12a of the light emitting element 12 is disposed on the lamp reference axis Ax in such a manner as to be directed vertically downward and the lower surface 18a of the holder 18 is made up of the horizontal plane which includes the lamp reference axis Ax.

Since the upwardly directing reflecting area 14aB is made up of the elliptic cylinder plane in which the axis extending in the direction inclined 55° rearward towards the outside in the vehicle width direction is made the focal line Ax2, the distribution pattern PB is brightest in a direction inclined 55° to the left of the line V-V (that is, a direction inclined 10° further to the left from the front direction of the lamp), but the distribution pattern PB is formed with substantially uniform brightness on the whole.

Thus, as has been described heretofore, in the vehicle cornering lamp 10 according to the exemplary embodiment, the light source is made up of the light emitting element 12 which is disposed to direct downward. The reflecting surface 14a of the reflector 14 is made up of the downwardly directing reflecting area 14aA which reflects the light from the light emitting element 12 as the downwardly directing light which diffuses in the horizontal direction and the upwardly directing reflecting area 14aB which reflects the light from the light emitting element 12 as the upwardly oriented light which diffuses not only in the vertical direction but also in the horizontal direction. Since the upwardly directing reflecting area 14aB is disposed in the vicinity of the upper end edge of the reflecting surface 14a and is made up of the elliptic cylinder plane which has as the vertical sectional shape the ellipse in which the emitting center O of the light emitting element 12 is made the first focal point and the predetermined point B lying further forward in the lamp than the first focal point is made the second focal point and extends in the horizontal direction and the focal line Ax2 of the elliptic cylinder plane is made up of the axis which extends in the direction inclined rearward at the predetermined angle β towards the outside in the vehicle width direction, the following function and advantage can be obtained.

Namely, the light from the light emitting element 12 which is reflected on the downwardly directing reflecting area 14aA comes to illuminate the road surface lying obliquely forward of the vehicle as the downwardly directing light which diffuses in the horizontal direction, while the light from the light emitting element 12 which is reflected on the upwardly directing reflecting area 14aB comes to illuminate upper space above the road surface lying obliquely forward of the vehicle as the upwardly directing light which diffuses not only in the vertical direction but also in the horizontal direction.

As the occurs, although it becomes possible to obtain the light which diffuses not only in the vertical direction but also in the horizontal direction by adopting the configuration in which the upwardly directing reflecting area 14aB is made up of the elliptic cylinder plane, since the upwardly directing reflecting area 14aB is disposed in the vicinity of the upper end edge of the reflecting surface 14a, the upwardly directing reflecting area 14aB can easily be formed in the position which is relatively close to the light emitting element 12. In addition, by the upwardly directing reflecting area 14aB being formed in the position which is relatively close to the light emitting element 12, the distribution pattern PB formed by the reflected light from the upwardly directing reflecting area 14aB can be formed as a large area of collected light source images, whereby a wide range of upper space above the road surface lying obliquely forward of the vehicle can easily be illuminated substantially uniformly with light having a low luminous intensity.

In the way, according to the embodiment, in the vehicle cornering lamp 10 for illuminating the road surface lying obliquely forward of the vehicle by reflecting light from the light emitting element 12 towards the front of the lamp by the reflector 14, the upper space above the road surface lying obliquely forward of the vehicle can be illuminated substantially uniformly with light having such a low luminous intensity as not to produce glaring light. In addition, the visibility of pedestrians or the like can be enhanced sufficiently by the configuration described above.

Namely, as is shown in Fig. 4, since not only a lower half body portion but also an upper half body portion of a pedestrian P situated obliquely forward of the vehicle can be illuminated, the verification of its presence can be ensured.

In the embodiment, too, since at least part of the downwardly directing reflecting area 14aA is made up of the parabolic cylinder plane in which the axis which extends in the direction which is inclined rearward at the predetermined angle α towards the outside of the vehicle width direction so as to pass through the point A lying in the vicinity of the light emitting element 12 is made a focal line, the downwardly directing light which diffuses largely in the horizontal direction can be obtained, whereby the road surface lying obliquely forward of the vehicle can be illuminated widely horizontally. As the occurs, since the backwardly inclination angle β of the focal line Ax2 of the elliptic cylinder plane is set to the larger value than the backwardly inclination angle α of the focal line Ax1 of the parabolic cylinder plane, the upper space above the road surface lying obliquely forward of the vehicle can be illuminated widely horizontally as near as the side of the vehicle, whereby the verification of presence of a pedestrian who is situated in an area lying substantially just beside the vehicle can also be further facilitated.

Furthermore, in the embodiment, since the configuration is adopted in which the upwardly directing reflecting area 14aB is disposed in the position on the reflecting surface 14a which lies further outwards in the vehicle width direction, the reflecting area of the downwardly directing reflecting area 14aA which is made up of the parabolic cylinder plane is disposed further downward than the upwardly directing reflecting area 14aB as the first reflecting area 14aA1, and the reflecting area on the downwardly directing reflecting area 14aA which lies inwards in the vehicle width direction of the upwardly directing reflecting area 14aB and the first reflecting area 14aA1 is made up as the second reflecting area 14aA2 for reflecting the light from the light emitting element 12 as the downwardly directing light which diffuses in the horizontal direction at the diffuse angle which is smaller than reflected light from the first reflecting area 14aA1, the following function and advantage can be obtained.

Namely, since the upwardly directing reflecting area 14aB is made up of the elliptic cylinder plane and the first reflecting area 14aA1 of the downwardly directing reflecting area 14aA is made up of the parabolic cylinder plane, by these upwardly directing reflecting area 14aB and first reflecting area 14aA1 being disposed in the position on the reflecting surface 14a which lies further outwards in the vehicle width direction, the illumination of the road surface lying obliquely forward of the vehicle and the upper space thereabove can easily be implemented without inclining the orientation of the lamp extremely largely towards the outside in the vehicle width direction with respect to the longitudinal direction of the vehicle.

In addition, in the embodiment, since the reflecting area which lies further inwards in the vehicle width direction than the upwardly directing reflecting area 14aB and the downwardly directing reflecting area 14aA is made the second reflecting area, by reflecting the light from the light emitting element 12 on the second reflecting area 14aA2 as the downwardly directing light which diffuses in the horizontal direction at the diffuse angle which is smaller than reflected light from the first reflecting area 14aA1, the hot zone HZ in the distribution pattern P of the vehicle cornering lamp 10 can easily be formed.

As the occurs, since the boundary line 14b between the upwardly directing reflecting area 14aB and the first reflecting area 14aA1 and the second reflecting area 14aA2 is set to be positioned on the vertical plane which passes through the vicinity of the light emitting center O of the light emitting element 12, almost all reflected light from the upwardly directing reflecting area 14aB and almost all reflected light from the first reflecting area 14aA1 of the downwardly directing reflecting area 14aA can be made not to be emitted further inwards in the vehicle width direction than the front direction of the lamp, whereby the illuminating range can easily be controlled.

In addition, by adopting the configuration described above, the following function and advantage can be obtained.

Namely, since the backwardly inclination angle β of the focal line Ax2 of the elliptic cylinder plane which constitutes the upwardly directing reflecting area 14aB is set to be the larger value than the backwardly inclination angle α of the focal line Ax1 of the parabolic cylinder plane which constitutes the first reflecting area 14aA1 of the downwardly directing reflecting area 14aA, the transversely elongated wedge-shaped stepped portion 14g is inevitably formed therebetween which gradually increases from the outside in the vehicle width direction towards the inside in the vehicle width direction. In addition, by the stepped portion 14g, part of light traveling from the light emitting element 12 to the first reflecting area 14aA1 of the downwardly directing reflecting area 14aA is blocked by the upwardly directing reflecting area 14aB to thereby be prevented from being incident on the first reflecting area 14aA1. In the respect, by the boundary line 14b between the upwardly directing reflecting area 14aB and the first reflecting area 14aA1 and the second reflecting area 14aA2 being set to be positioned on the vertical plane which passes through the vicinity of the light emitting center O of the light emitting element 12, the transversely elongated wedge-shaped stepped portion 14g can be prevented from becoming extremely large. Then, by the configuration, the area on the first reflecting area 14aA1 of the downwardly directing reflecting area 14a on which light is not incident can be suppressed to a small level, thereby making effective use of the luminous flux of the light source.

Furthermore, in the embodiment, since the second reflecting area 14aA2 of the downwardly directing reflecting area 14aA is made up of the plurality of reflecting elements which are formed based on, as a reference plane, the paraboloidal plane in which the point A lying in the vicinity of the light emitting element 12 is made the focal point, the reflected light control on light from the light emitting element 12 can be implemented in detail, whereby a distribution pattern of the vehicle cornering lamp 10 can easily be formed which is provided with a desired luminous intensity distribution.

In addition, in the embodiment, while the illuminating range of the upper space above the road surface lying obliquely forward of the vehicle is set to the angle ranging substantially from 0 to 20° upwards with respect to the vertical direction and to the angle ranging substantially from 45 to 115° to the left relative to the front direction of the vehicle with respect to the horizontal direction, the illuminating range can appropriately be adjusted by setting the backwardly inclination angle of the focal line Ax2 of the elliptic cylinder plane and the position of the predetermined point B.
Additionally, in the embodiment, while the boundary line 14b between the upwardly directing reflecting area 14ab and the first reflecting area 14aA1 and the second reflecting area 14aA2 has been described as being positioned slightly further inwards in the vehicle width direction than the light emitting center O of the light emitting element 12, as long as the boundary line 14b is set to be positioned on the vertical plane which passes through the vicinity of the light emitting center O of the light emitting element 12, even though the boundary line 14b is set to be positioned directlybelow the light emitting center O or slightly further outwards in the vehicle width direction than the light emitting center O, substantially the same function and advantage as those of the embodiment can be obtained.

Furthermore, in the embodiment, while the cornering lamp 10 adapted to be mounted in the front left-hand side corner of the vehicle body has been described, as to a cornering lamp that is to be mounted in a front right-hand side corner of the vehicle body, by forming the cornering lamp into a shape laterally symmetrical with the vehicle cornering lamp 10, the same function and advantage as those of the embodiment can be obtained.

In addition, while the vehicle cornering lamp 10 according to the embodiment is made to be illuminated when the vehicle turns left to illuminate the road surface lying obliquely forward of the vehicle, the vehicle cornering lamp 10 can be made to be illuminated when the vehicle turns right. The is true with the cornering lamp which is disposed laterally symmetrically with the vehicle cornering lamp 10. By adopting the configuration described above, both the left- and right-hand sides of the vehicle can be illuminated widely when the vehicle turns, whereby the verification of safety on the left- and right-hand sides of the vehicle can be implemented, and by the configuration, the safety in driving the vehicle can be further enhanced.

Note that the numeric values shown as specifications in the embodiment described heretofore are only examples, and these numeric values may of course be set to different appropriate values.

## Claims

1. A vehicle cornering lamp comprising:
a light source (12) comprising a light emitting element (12) directing downward; and
a reflector (14) for reflecting light from the light source (12) to a front of the lamp so as to illuminate obliquely forward of a vehicle,
wherein a reflecting surface (14a) of the reflector (14) comprises:
a downwardly directing reflecting area (14aA) for reflecting light from the light emitting element (12) as downwardly directing light which diffuses in a horizontal direction; and
an upwardly directing reflecting area (14aB) for reflecting light from the light emitting element (12) as upwardly directing light which diffuses in a vertical direction and the horizontal direction,
wherein the upwardly directing reflecting area (14aB) is disposed in a vicinity of an upper edge of the reflecting surface (14a),
**characterized in that** the upwardly directing reflecting area (14aB) comprises an elliptic cylinder plane extending in the horizontal direction, a vertical sectional shape of the elliptic cylinder plane being an ellipse having a first focal point in a vicinity of the light emitting element (12) and a second focal point on a point (B) further forward than the first focal point, and
wherein a focal line (Ax2) of the elliptic cylinder plane extends in a direction inclined rearward towards an outside in a vehicle width direction (Ax0).

2. The vehicle cornering lamp according to Claim 1, wherein at least a part (14aA1) of the downwardly directing reflecting area (14aA) comprises a parabolic cylinder plane, the parabolic cylinder plane having a focal line (Ax1) extending in a direction inclined rearward towards the outside of the vehicle width direction (Ax0), and the focal line passing through a point (A) in the vicinity of the light emitting element.

3. The vehicle cornering lamp according to Claim 2, wherein the focal line (Ax2) of the elliptic cylinder plane is inclined rearward at a first inclination angle (β) towards the outside in the vehicle width direction (Ax0),
wherein the focal line (Ax1) of the parabolic cylinder plane is inclined rearward at a second inclination angle (α) towards the outside in the vehicle width direction (Ax0), and
wherein the first inclination angle (β) is larger than the second inclination angle (α).

4. The vehicle cornering lamp according to Claim 2 or 3, wherein the upwardly directing reflecting area (14aB) is disposed in a position on the reflecting surface (14a) outwards in the vehicle width direction (Ax0),
wherein the part (14aA1) of the downwardly directing reflecting area (14aA) comprising the parabolic cylinder plane is a first reflecting area (14aA1) disposed downward than the upwardly directing reflecting area (14aB), and
wherein a reflecting area in the downwardly directing reflecting area (14aA) positioned inwards in the vehicle width direction of the upwardly directing reflecting area (14aB) and the first reflecting area (14aA1) is a second reflecting area (14aA2) for reflecting light from the light emitting element (12) as downwardly directing light which diffuses in the horizontal direction at a diffuse angle which is smaller than reflected light from the first reflecting area (14aA1).

5. The vehicle cornering lamp according to Claim 4, wherein a boundary line (14b) between the upwardly directing reflecting area (14aB) and the first reflecting area (14aA1) and the second reflecting area (14aA2) is positioned on a vertical plane passing through a vicinity of a light emitting center (O) of the light emitting element (12).

6. The vehicle cornering lamp as set forth in Claim 4 or 5, wherein the second reflecting area (14aA2) comprises a plurality of reflecting elements (14s) which are respectively formed based on reference planes, each of the reference planes being a paraboloidal plane having a focal point in a vicinity of the light emitting element.

## Patentansprüche

1. Fahrzeug-Kurvenfahrscheinwerfer, enthaltend:
eine Lichtquelle (12), die ein Lichtemittierelement (12) enthält, das nach unten weist; und
einen Reflektor (14), der Licht von der Lichtquelle (12) zu einer Vorderseite der Lampe reflektiert, so dass eine Beleuchtung schräg nach vorne von einem Fahrzeug erfolgt,
wobei eine Reflexionsfläche (14a) des Reflektors (14) enthält:
eine nach unten weisende Reflexionsfläche (14aA) zum Reflektieren von Licht aus dem Lichtemittierelement (12) als nach unten gerichtetes Licht, das in einer horizontalen Richtung streut; und
eine nach oben weisende Reflexionsfläche (14aB) zum Reflektieren von Licht aus dem Lichtemittierelement (12) als nach oben gerichtetes Licht, das in einer vertikalen Richtung und der horizontalen Richtung streut,
wobei die nach oben weisende Reflexionsfläche (14aB) in einer Nähe eines oberen Randes der Reflexionsfläche (14a) angeordnet ist,
**dadurch gekennzeichnet, dass**
die nach oben weisende Reflexionsfläche (14aB) eine elliptische Zylinderebene enthält, die sich in der horizontalen Richtung erstreckt, wobei die Vertikalschnittform der elliptischen Zylinderebene eine Ellipse ist, die einen ersten Brennpunkt in einer Nähe des Lichtemittierelementes (12) und einen zweiten Brennpunkt auf einem Punkt (B) hat, der weiter vorne gelegen ist als der erste Brennpunkt,
wobei sich eine Brennlinie (Ax2) der elliptischen Zylinderebene in einer Richtung erstreckt, die nach hinten zu einer Außenseite in einer Fahrzeugbreitenrichtung (Ax0) geneigt ist.

2. Fahrzeug-Kurvenfahrscheinwerfer nach Anspruch 1, bei der wenigstens ein Teil (14aA1) der nach unten weisenden Reflexionsfläche (14aA) eine Parabolzylinderebene enthält, wobei die Parabolzylinderebene eine Brennlinie (Ax1) hat, die sich in einer Richtung erstreckt, die nach hinten zur Außenseite der Fahrzeugbreitenrichtung (Ax0) geneigt ist, und die Brennlinie einen Punkt (A) in der Nähe des Lichtemittierelementes durchläuft.

3. Fahrzeug-Kurvenfahrscheinwerfer nach Anspruch 2, bei dem die Brennlinie (Ax2) der elliptischen Zylinderebene nach hinten in einem ersten Neigungswinkel (β) zur Außenseite in der Fahrzeugbreitenrichtung (Ax0) geneigt ist,
wobei die Brennlinie (Ax1) der Parabolzylinderebene nach hinten in einem zweiten Neigungswinkel (α) zur Außenseite in der Fahrzeugbreitenrichtung (Ax0) geneigt ist und
der erste Neigungswinkel (β) größer ist als der zweite Neigungswinkel (α).

4. Fahrzeug-Kurvenfahrscheinwerfer nach Anspruch 2 oder 3, bei dem die nach oben weisende Reflexionsfläche (14aB) in einer Position auf der Reflexionsfläche (14a) außerhalb in der Fahrzeugbreitenrichtung (Ax0) angeordnet ist,
wobei der Teil (14aA1) der nach unten weisenden Reflexionsfläche (14aA), die die Parabolzylinderebene enthält, eine erste Reflexionsfläche (14aA1) ist, die tiefer angeordnet ist als die nach oben weisende Reflexionsfläche (14aB), und
eine Reflexionsfläche in der nach unten weisenden Reflexionsfläche (14aA), die in Fahrzeugbreitenrichtung innerhalb der nach oben weisenden Reflexionsfläche (14aB) und der ersten Reflexionsfläche (14aA1) liegt, eine zweite Reflexionsfläche (14aA2) ist, die Licht aus dem Lichtemittierelement (12) als nach unten gerichtetes Licht reflektiert, das in der horizontalen Richtung in einem Streuwinkel streut, der geringer ist als reflektiertes Licht von der ersten Reflexionsfläche (14aA1).

5. Fahrzeug-Kurvenfahrscheinwerfer nach Anspruch 4, bei dem eine Begrenzungslinie (14b) zwischen der nach oben weisenden Reflexionsfläche (14aB) und der ersten Reflexionsfläche (14aA1) sowie der zweiten Reflexionsfläche (14aA2) auf einer vertikalen Ebene angeordnet ist, die durch eine Nähe eines Lichtemissionszentrums (O) des Lichtemittierelementes (12) verläuft.

6. Fahrzeug-Kurvenfahrscheinwerfer nach Anspruch 4 oder 5, bei dem die zweite Reflexionsfläche (14aA2) eine Vielzahl von Reflexionselementen (14s) enthält, die jeweils auf der Basis von Bezugsebenen ausgebildet sind, wobei jede der Bezugsebenen eine Parabolebene ist, die einen Brennpunkt in einer Nähe des Lichtemittierelementes hat.

## Revendications

1. Phare de virage de véhicule comprenant :
une source lumineuse (12) comprenant un élément émetteur de lumière (12) dirigé vers le bas ; et
un réflecteur (14) pour réfléchir la lumière depuis la source lumineuse (12) vers un avant du phare de façon à éclairer obliquement à l'avant d'un véhicule,
dans lequel une surface réfléchissante (14a) du réflecteur (14) comprend :
une surface réfléchissante dirigée vers le bas (14aA) pour réfléchir la lumière venant de l'élément émetteur de lumière (12) comme une lumière dirigée vers le bas qui diffuse dans une direction horizontale; et
une surface réfléchissante dirigée vers le haut (14aB) pour réfléchir la lumière venant de l'élément émetteur de lumière (12) comme une lumière dirigée vers le haut qui diffuse dans une direction verticale et la direction horizontale,
dans lequel la surface réfléchissante dirigée vers le haut (14aB) est disposée dans un voisinage d'un bord supérieur de la surface réfléchissante (14a),
**caractérisé en ce que** la surface réfléchissante dirigée vers le haut (14aB) comprend un plan de cylindre elliptique s'étendant dans la direction horizontale, une forme en coupe verticale du plan de cylindre elliptique étant une ellipse ayant un premier point focal dans un voisinage de l'élément émetteur de lumière (12) et un second point focal sur un point (B) plus en avant que le premier point focal,
et dans lequel une ligne focale (Ax2) du plan de cylindre elliptique s'étend dans une direction inclinée vers l'arrière vers un extérieur dans une direction de largeur du véhicule (Ax0).

2. Phare de virage de véhicule selon la revendication 1, dans lequel au moins une partie (14aA1) de la surface réfléchissante dirigée vers le bas (14aA) comprend un plan de cylindre parabolique, le plan de cylindre parabolique ayant une ligne focale (Ax1) s'étendant dans une direction inclinée vers l'arrière vers l'extérieur de la direction de largeur du véhicule (Ax0), et la ligne focale passant par un point (A) dans le voisinage de l'élément émetteur de lumière.

3. Phare de virage de véhicule selon la revendication 2, dans lequel la ligne focale (Ax2) du plan de cylindre elliptique est inclinée vers l'arrière avec un premier angle d'inclinaison (β) vers l'extérieur dans la direction de la largeur du véhicule (Ax0),
dans lequel la ligne focale (Ax1) du plan de cylindre elliptique est inclinée vers l'arrière avec un second angle d'inclinaison (α) vers l'extérieur dans la direction de la largeur du véhicule (Ax0),
dans lequel le premier angle d'inclinaison (β) est plus grand que le second angle d'inclinaison (α).

4. Phare de virage de véhicule selon la revendication 2 ou 3, dans lequel la surface réfléchissante dirigée vers le haut (14aB) est disposée dans une position sur la surface réfléchissante (14a) vers l'extérieur dans la direction de la largeur du véhicule (Ax0),
dans lequel la partie (14aA1) de la surface réfléchissante dirigée vers le bas (14aA) comprenant le plan de cylindre parabolique est une première surface réfléchissante (14aA1) disposée plus vers le bas que la surface réfléchissante dirigée vers le haut (14aB), et
dans lequel une surface réfléchissante dans la surface réfléchissante dirigée vers le bas (14aA) vers l'intérieur dans la direction de la largeur du véhicule de la surface réfléchissante dirigée vers le haut (14aB) et la première surface réfléchissante (14aA1) est une seconde surface réfléchissante (14aA2) pour réfléchir la lumière venant de l'élément émetteur de lumière (12) comme une lumière dirigée vers le bas qui diffuse dans la direction horizontale avec un angle de diffusion qui est plus petit que la lumière réfléchie depuis la première surface réfléchissante (14aA1).

5. Phare de virage de véhicule selon la revendication 4, dans lequel une ligne frontière (14b) entre la surface réfléchissante dirigée vers le haut (14aB) et la première surface réfléchissante (14aA1) et la seconde surface réfléchissante (14aA2) est positionnée sur un plan vertical passant par un voisinage d'un centre d'émission de lumière (O) de l'élément d'émission de lumière (12).

6. Phare de virage de véhicule selon la revendication 4 ou 5, dans lequel la seconde surface réfléchissante (14aA2) comprend une pluralité d'éléments réfléchissant (14s) qui sont formés respectivement basés sur des plans de référence, chacun des plans de référence étant un plan paraboloïde ayant un point focal dans un voisinage de l'élément émetteur de lumière.
